# EUROPEAN PATENT SPECIFICATION

(11) **EP 3 371 267 B1**
(45) Date of publication and mention of the grant of the patent: **13.05.2020**
(21) Application number: 16788100.2
(22) Date of filing: 27.10.2016
(51) Int. Cl.: C09D 175/04, C09D 5/00, C08G 71/04

(54) **BIOBASED HYDROXY-URETHANES AS REACTIVE DILUENTS**
BIOBASIERTE HYDROXYURETHANE ALS REAKTIVVERDÜNNER
HYDROXY-URÉTHANES BIOLOGIQUES UTILISÉS COMME DILUANTS RÉACTIFS

(30) Priority: 03.11.2015 US 201562250026 P
(43) Date of publication of application: 12.09.2018
(73) Proprietor: BASF Coatings GmbH, 48165 Münster (DE)
(72) Inventor: JADHAV, Abhijit, Ypsilanti 48197 (US)
(74) Representative: BASF IP Association
(86) International application number: PCT/EP2016/075991
(87) International publication number: WO 2017/076754

(56) References cited:
- ROKICKI G ET AL: "A new route to polyurethanes from ethylene carbonate, diamines and diols", POLYMER, ELSEVIER SCIENCE PUBLISHERS B.V, GB, vol. 43, no. 10, 1 May 2002 (2002-05-01), pages 2927-2935, XP004343294, ISSN: 0032-3861, DOI: 10.1016/S0032-3861(02)00071-X
- JULIËN L.J. VAN VELTHOVEN ET AL: "Poly(hydroxy urethane)s based on renewable diglycerol dicarbonate", EUROPEAN POLYMER JOURNAL., vol. 70, 1 September 2015 (2015-09-01), pages 125-135, XP055320042, GB ISSN: 0014-3057, DOI: 10.1016/j.eurpolymj.2015.07.011

## Description

### TECHNICAL FIELD

The present invention relates generally to the field of coating compositions. More particularly, embodiments of the invention relate to coating compositions comprising biobased hydroxy-urethanes and their use as reactive diluents in solvent-borne automotive coating compositions.

### BACKGROUND

Polyurethane resins are widely used in curable compositions such as coating compositions. Polyurethanes are generally formed by the reaction of a diisocyanate and a compound having two functional groups with mobile hydrogen (e.g. a diol). The choice of the starting materials, both of the diisocyanate and of the diol, is extensive and permits a wide variety of combinations, resulting in polyurethane products having different properties and applications.

One area of concern with polyurethane resins for curable compositions has been the incorporation of sufficient levels of functional groups into the resin in order to achieve high cure performance. Hydroxyl groups are commonly used as functional groups in curable compositions, but polyurethane resins with pendant hydroxyl groups are difficult to prepare because the pendant hydroxyl groups are consumed by reaction with isocyanate during formation of the polyurethane. Hydroxyl functional groups are generally incorporated into polyurethane resins through the use of polyol capping agents, resulting in terminal OH groups, but no secondary OH groups. For example, EP 0718334 is directed to a method of preparing a polyurethane polymer or oligomer, the method comprising (a) reacting a mixture comprising a polyol having a plurality of pendant carbamate groups and a polyisocyanate to form a polyurethane having pendant carbamate groups, and (b) optionally, capping the polyurethane from (a) with an active hydrogen-containing capping agent. Such resins provide only limited crosslink density upon curing.

An additional disadvantage of conventional polyurethanes is their method of synthesis, which involves the use of monomers having a plurality of toxic isocyanate functional groups. The use of isocyanates to produce polyurethanes is problematic because of the environmental and health hazards associated with the isocyanate raw materials.

The reaction of cyclic carbonates with amines or polyamines is known to produce polyols which can be reacted with isocyanates to produce polyurethanes. The cyclic carbonate groups are ring opened and converted to a hydroxyl group and a pendant carbamate group. Cyclic carbonates and amines have also been shown to react to yield hydroxylated carbamate compounds (i.e. urethanes). For example, U.S. Patent No. 4,520,167 provides a reactive diluent in coating compositions, which is obtained by reacting a cyclic carbonate with a primary amine to provide a hydroxylated carbamate compound. The reaction, however, of cyclic carbonates with secondary or hindered primary amines requires heating and/or the use of catalysts to produce hydroxy urethanes. This is a cumbersome and expensive production process. Thus, there is a need for hydroxy-urethanes which can be produced in the absence of isocyanate materials utilizing a streamlined production method.

### SUMMARY

A first aspect of the invention is directed to a coating composition. A first embodiment is directed to a curable coating composition comprising: (a) a biobased hydroxy urethane prepared by reacting a cyclic carbonate of general formula (I) 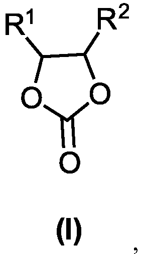 wherein R¹ and R² are independently selected from hydrogen, halogen or a linear alkyl group having 1 to 6 carbon atoms, wherein the cyclic carbonate is selected from the group consisting of ethylene carbonate, propylene carbonate, and butylene carbonate, with a fatty acid diamine of formula (II) 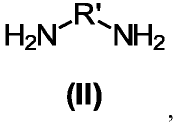 wherein R' comprises a hydrophobic group having 16-54 carbon atoms, and wherein the reaction is conducted in the absence of an isocyanate; and (b) a curing agent.

In a second embodiment, the curable coating composition of the first embodiment is modified, wherein the curing agent is selected from a melamine resin, a formaldehyde resin, a melamine formaldehyde resin, an urea resin, a polyanhydride, a polysiloxane, an isocyanate, and a diisocyanate.

In a third embodiment, the curable coating composition of the first and second embodiments is modified, wherein the cyclic carbonate is propylene carbonate.

In a fourth embodiment, the curable coating composition of the first through third embodiments is modified, wherein the fatty acid diamine has the general formula (III)

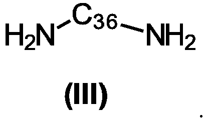

In a fifth embodiment, the curable coating composition of the first through fourth embodiments is modified, wherein the fatty acid diamine comprises a C₃₆ fatty acid dimer diamine having the molecular structure:

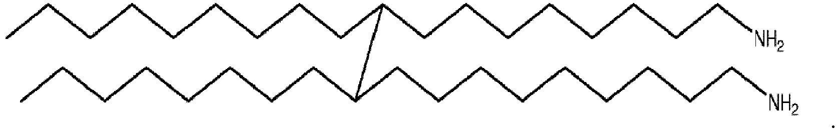

In an sixth embodiment, the curable coating composition of the first through fifth embodiments is modified, wherein the reaction is conducted at a temperature in the range of about 20 °C to about 30°C.

In a seventh embodiment, the curable coating composition of the first through sixth embodiments is modified, wherein the biobased hydroxy urethane comprises general formula (IV) 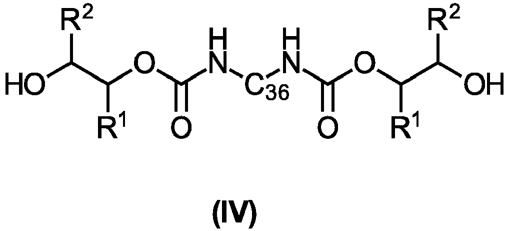 wherein R¹ and R² are independently selected from hydrogen, halogen or a linear alkyl group having 1 to 6 carbon atoms.

A second aspect of the present invention is directed to a use. An eight embodiment is directed to use of the biobased hydroxy-urethane of the seventh embodiment as a reactive diluent in a solvent-born automotive coating, or a paint.

### DETAILED DESCRIPTION

Before describing several exemplary embodiments of the invention, it is to be understood that the invention is not limited to the details of construction or process steps set forth in the following description. The invention is capable of other embodiments and of being practiced or being carried out in various ways.

Due to environmental concerns, health concerns, unwanted side reactions, energy intensive production processes, and costs, there is a need to produce polyurethanes, particularly hydroxy urethanes, in the absence of an isocyanate. It was found that specific cyclic carbonates could be reacted with biobased fatty acid diamines to produce polyurethanes, particularly hydroxy-urethanes, in the absence of an isocyanate.

With respect to the terms used in this disclosure, the following definitions are provided.

As used herein, the term "cyclic carbonate" refers to a carbonate ester derived from propylene glycol. In one or more embodiments, the cyclic carbonate has the molecular formula R¹R²C₂H₃O₂CO, and has the general structure (I):

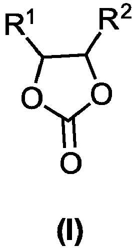

wherein R¹ and R² are independently selected from hydrogen, halogen or a linear alkyl group having 1 to 6 carbon atoms. As used herein, the term alkyl group has is usual meaning of a piece of a molecule with the general formula CₙH₂ₙ₊₁, where n an integer. For example, a methyl group (CH₃) is a fragment of a methane molecular (CH₄); where n=1. The *-yl* ending means a fragment of an alkane formed by removing a hydrogen. Thus, an alkyl group having 1 to 6 carbon atoms means that n is from 1 to 6. As used herein, the term halogen has its usual meaning of a group in the periodic table consisting of five chemically related elements, fluorine (F), chlorine (Cl), bromine (Br), iodine (I), and astatine (At). According to the invention, the cyclic carbonate is selected from the group consisting of ethylene carbonate, propylene carbonate, and butylene carbonate. In specific embodiments the cyclic carbonate is propylene carbonate.

As used herein, there term "diamine" refers to a polyamine having exactly two amino groups. The term "fatty acid diamine" refers to a polyamine having exactly two amino groups prepared from fatty dimer diacids, which have been produced from dimerization of one or more fatty acids. In one or more embodiments, the fatty acid diamine has the general structure (II): 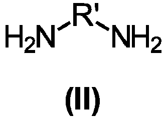 wherein R' represents a hydrophobic group having 16-54 carbon atoms, which can be straight chained or branched and can be aliphatic, cycloaliphatic, or aryl aliphatic. In one or more embodiments, the fatty diamine comprises a C₃₆ fatty dimer diamine having the molecular structure:

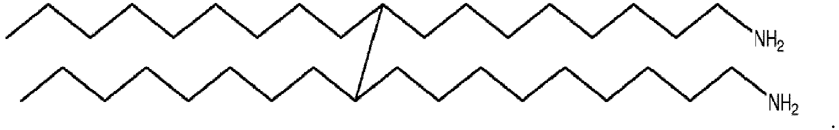

In one or more embodiments, the fatty acid diamine is a fatty acid diamine having the general formula (III):

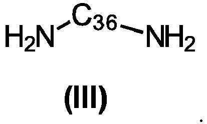

Commercially available hydrophobic fatty diamines include, without limitation Versamine® 552 hydrogenated fatty C₃₆ dimer diamine, Versamine® 551 fatty C₃₆ dimer diamine, and Priamine® 1073 and Priamine® 1074 fatty C₃₆ dimer diamine.

As used herein, the term "isocyanate" refers to organic compounds having a functional group with the general formula R₃-N=C=O. Isocyanates react with compounds containing hydroxyl groups to produce polyurethane polymers. Isocyanates are raw materials that make up polyurethane products. Health effects of isocyanate exposure include irritation of skin and mucous membranes, chest tightness, and difficulty breathing. Isocyanates include compounds classified as potential carcinogens.

As used herein, the term "in the absence of an isocyanate" means that the hydroxy urethane is formed without an isocyanate present in the reaction mixture.

In one or more embodiments, the reaction is conducted at a temperature in the range of about 20 °C to about 100 °C, including in a range of about 20 °C to about 80 °C, about 20 °C to about 60 °C, about 20 °C to about 40 °C, about 20 °C to about 35 °C, and about 20 °C to about 30 °C. In one or more specific embodiments, the reaction is conducted at ambient temperature.

As used herein, the term "ambient temperature" refers to the temperature of the surrounding environment. In an indoor environment, ambient temperature is the same at room temperature, and refers to the temperature inside a temperature-controlled building. Generally, room temperature is about 20 to 35 °C.

As used herein, the terms "hydroxy urethane" and "poly(hydroxy urethane)" refer to functional polyurethane compounds comprising hydroxyl functional groups along the polymer chain. Generally, the hydroxyl (-OH) functional group is in the β-position of the urethane functional group during the reaction. According to the invention, the hydroxy urethane compounds are biobased. As used herein, the term "biobased" refers to a commercial or industrial material (other than food or feed) that is composed, in whole or in significant part, of biological products or renewable domestic agricultural materials (including plant, animal, and marine materials), or forestry materials or an intermediate feedstock.

As used herein, the terms "reactive diluent" or "reactive co-solvent" refer to a material that is primarily used to reduce viscosity. In one or more embodiments, the reactive diluent reacts with a curing agent at approximately the same rate as the resin, and is non-reactive with the resin under standard storage conditions.

As used herein, the term "resin" refers to oligomers or compounds that do not have a backbone of regularly repeating monomer units, for example higher molecular weight compounds with one or more heteroatom-containing linking groups in addition to the hydroxyl group or groups. Resins may be dendrimers, hyperbranched, or "star" resins that are prepared from a polyfunctional core compound in one or more successive generations of branching reactants having one group reactive with the functionality of the core or of the latest generation to be added to the core and one or a plurality of groups available for reaction with the next generation of branching reactant.

Oligomers are polymers having relatively few monomer units; generally, "oligomer" refers to polymers with only a few monomer units, perhaps up to ten. As used herein, the term "polymers" encompasses oligomers as well as polymers with higher numbers of monomer units.

### Coating Compositions

In a first aspect of the present invention, the biobased hydroxy urethanes prepared by reacting a cyclic carbonate selected from ethylene carbonate, propylene carbonate and butylene carbonate with a fatty acid diamine of formula (II) are contained in curable coating compositions. Such compositions may be cured by a reaction of the biobased hydroxy urethanes material or materials with a curing agent that is a compound having a plurality of functional groups that are reactive with the hydroxyl groups on the polymer. Such reactive groups include active methylol, methylalkoxy or butylalkoxy groups on aminoplast crosslinking agents. Aminoplasts, or amino resins, are described in Encyclopedia of Polymer Science and Technology vol. 1, p. 752-789 (1985). An aminoplast is obtained by reaction of an activated nitrogen with a lower molecular weight aldehyde, optionally with further reaction with an alcohol (for example, a mono-alcohol with one to four carbon atoms such as methanol, isopropanol, n-butanol, isobutanol, etc.) to form an ether group. In one or more embodiments, examples of activated nitrogens include, but are not limited to, activated amines such as melamine, benzoguanamine, cyclohexylcarboguanamine, and acetoguanamine; ureas, including urea itself, thiourea, ethyleneurea, dihydroxyethyleneurea, and guanylurea; glycoluril; amides, such as dicyandiamide; and carbamate functional compounds having at least one primary carbamate group or at least two secondary carbamate groups. The activated nitrogen is reacted with a lower molecular weight aldehyde. The aldehyde may be selected from formaldehyde, acetaldehyde, crotonaldehyde, benzaldehyde, or other aldehydes used in making aminoplast resins. In specific embodiments, formaldehyde and acetaldehyde, especially formaldehyde, are used. The activated nitrogen groups are at least partially alkylolated with the aldehyde, and may be fully alkylolated. In specific embodiments, the activated nitrogen groups are fully alkylolated. The reaction may be catalyzed by an acid, e.g. as taught in U.S. Patent No. 3,082,180.

The optional alkylol groups formed by the reaction of the activated nitrogen with aldehyde may be partially or fully etherified with one or more monofunctional alcohols. Suitable examples of the monofunctional alcohols include, without limitation, methanol, ethanol, n-propanol, isopropanol, n-butanol, isobutanol, tert-butyl alcohol, benzyl alcohol, and so on. In one or more embodiments, monofunctional alcohols having one to four carbon atoms and mixtures of these are used. The etherification may be carried out, for example, by the processes disclosed in U.S. Patents No. 4,105,708 and 4,293,692. The aminoplast may be at least partially etherified, and in one or more embodiments the aminoplast is fully etherified. For example, the aminoplast compounds may have a plurality of methylol and/or etherified methylol, butylol, or alkylol groups, which may be present in any combination and along with unsubstituted nitrogen hydrogens. Examples of suitable curing agent compounds include, without limitation, melamine formaldehyde resins, including monomeric or polymeric melamine resins and partially or fully alkylated melamine resins, and urea resins (e.g., methylol ureas such as urea formaldehyde resin, and alkoxy ureas such as butylated urea formaldehyde resin). One nonlimiting example of a fully etherified melamine-formaldehyde resin is hexamethoxymethyl melamine. In other embodiments, the curing agent comprises an isocyanate and/or a diisocyanate.

The alkylol groups are capable of self reaction to form oligomeric and polymeric materials. Useful materials are characterized by a degree of polymerization. For melamine formaldehyde resins, resins having a number average molecular weight less than about 2000, less than 1500, and less than 1000 are used.

A coating composition including the biobased hydroxyl urethane materials and aminoplast crosslinking agents may further include a strong acid catalyst to enhance the cure reaction. Such catalysts are well-known in the art and include, for example, para-toluenesulfonic acid, dinonylnaphthalene disulfonic acid, dodecylbenzenesulfonic acid, phenyl acid phosphate, monobutyl maleate, butyl phosphate, and hydroxy phosphate ester. Strong acid catalysts are often blocked, e.g. with an amine.

The amount of the biobased hydroxyl urethane materials and the aminoplast crosslinker in the coating composition may be varied widely and is typically 8 wt. % to 20 wt. % by weight, 10 wt. % to 16 wt. % by weight, of the biobased hydroxyl urethane material or materials based on the total weight of the biobased hydroxyl urethane materials and aminoplast crosslinker.

In a curable composition according to the invention, curing is effected by a reaction of the biobased hydroxyl urethane material with a curing agent. In one or more embodiments, the curing agent includes melamine formaldehyde resins (including monomeric or polymeric melamine resin and partially or fully alkylated melamine resin), urea resins (e.g., methylol ureas such as urea formaldehyde resin, alkoxy ureas such as butylated urea formaldehyde resin), polyanhydrides (e.g., polysuccinic anhydride), and polysiloxanes (e.g., trimethoxy siloxane). In specific embodiments, the curing agent is melamine formaldehyde resin or urea formaldehyde resin.

A solvent may optionally be utilized in the coating compositions. Although the coating composition may be formulated, for example, in the form of a powder, it is often desirable that the composition be in a substantially liquid state, which can be accomplished with the use of a solvent to either dissolve or disperse the product biobased hydroxy-urethane material or materials and aminoplast crosslinker. In general, depending on the solubility characteristics of the components, the solvent can be any organic solvent and/or water. In specific embodiment, the solvent is a polar organic solvent. More specifically, the solvent is a polar aliphatic solvent or polar aromatic solvent. In one or more embodiments, the solvent is a ketone, ester, acetate, aprotic amide, aprotic sulfoxide, or aprotic amine. Examples of useful solvents include methyl ethyl ketone, methyl isobutyl ketone, n-amyl acetate, ethylene glycol butyl ether acetate, propylene glycol monomethyl ether acetate, xylene, N-methylpyrrolidone, or blends of aromatic hydrocarbons. In other embodiments, the biobased hydroxyl urethane materials and aminoplast crosslinker are dispersed in water or a mixture of water with small amounts of organic water-soluble or -miscible cosolvents. In one or more embodiments, the solvent present in the coating composition is in an amount of from about 0.01 weight percent to about 99 weight percent, from about 10 weight percent to about 60 weight percent, and from about 30 weight percent to about 50 weight percent. The solvent or solvent mixture may be composed of aromatic hydrocarbons such as 1,2,4-trimethylbenzene, mesitylene, xylene, propylbenzene and isopropylbenzene. One example of a suitable solvent mixture comprising aromatic hydrocarbons is solvent naphtha. The solvent may also be composed of aliphatic hydrocarbons, ketones such as acetone, methyl ethyl ketone or methyl amyl ketone, esters such as ethyl acetate, butyl acetate, pentyl acetate or ethyl ethoxy propionate, ethers or mixtures thereof. Examples of such solvents are aliphatic and/or aromatic hydrocarbons such as toluene, xylene, solvent naphtha, and mineral spirits, ketones, such as acetone, methyl ethyl ketone or methyl amyl ketone, esters, such as ethyl acetate, butyl acetate, pentyl acetate or ethyl ethoxypropionate, ethers such as glycol ethers like propylene glycol monomethyl ether, alcohols such as ethanol, propanol, isopropanol, n-butanol, isobutanol, and tert-butanol, nitrogen-containing compounds such as N-methyl pyrrolidone and N-ethyl pyrrolidone, and combinations thereof.

When the coating compositions are formulated as basecoat topcoats, monocoat topcoats, or primers they contain pigments and fillers, including special effect pigments. Nonlimiting examples of special effect pigments that may be utilized in basecoat and monocoat topcoat coating compositions include metallic, pearlescent, and color-variable effect flake pigments. Metallic (including pearlescent, and color-variable) topcoat colors are produced using one or more special flake pigments. Metallic colors are generally defined as colors having gonioapparent effects. For example, the American Society of Testing Methods (ASTM) document F284 defines metallic as "pertaining to the appearance of a gonioapparent material containing metal flake." Metallic basecoat colors may be produced using metallic flake pigments like aluminum flake pigments, coated aluminum flake pigments, copper flake pigments, zinc flake pigments, stainless steel flake pigments, and bronze flake pigments and/or using pearlescent flake pigments including treated micas like titanium dioxide-coated mica pigments and iron oxide-coated mica pigments to give the coatings a different appearance (degree of reflectance or color) when viewed at different angles. Metal flakes may be cornflake type, lenticular, or circulation-resistant; micas may be natural, synthetic, or aluminum-oxide type. Flake pigments do not agglomerate and are not ground under high shear because high shear would break or bend the flakes or their crystalline morphology, diminishing or destroying the gonioapparent effects. The flake pigments are satisfactorily dispersed in a binder component by stirring under low shear. The flake pigment or pigments may be included in the high solids coating composition in an amount of about 0.01 wt.% to about 0.3 wt.% or about 0.1 wt.% to about 0.2 wt.%, in each case based on total binder weight. Nonlimiting examples of commercial flake pigments include PALIOCROME® pigments, available from BASF Corporation.

Nonlimiting examples of other suitable pigments and fillers that may be utilized in basecoat and monocoat topcoat coating compositions include inorganic pigments such as titanium dioxide, barium sulfate, carbon black, ocher, sienna, umber, hematite, limonite, red iron oxide, transparent red iron oxide, black iron oxide, brown iron oxide, chromium oxide green, strontium chromate, zinc phosphate, silicas such as fumed silica, calcium carbonate, talc, barytes, ferric ammonium ferrocyanide (Prussian blue), and ultramarine, and organic pigments such as metallized and non-metallized azo reds, quinacridone reds and violets, perylene reds, copper phthalocyanine blues and greens, carbazole violet, monoarylide and diarylide yellows, benzimidazolone yellows, tolyl orange, naphthol orange, nanoparticles based on silicon dioxide, aluminum oxide or zirconium oxide, and so on. In one or more embodiments, the pigment or pigments are dispersed in a resin or polymer or with a pigment dispersant, such as binder resins of the kind already described, according to known methods. In general, the pigment and dispersing resin, polymer, or dispersant are brought into contact under a shear high enough to break the pigment agglomerates down to the primary pigment particles and to wet the surface of the pigment particles with the dispersing resin, polymer, or dispersant. The breaking of the agglomerates and wetting of the primary pigment particles are important for pigment stability and color development. Pigments and fillers may be utilized in amounts typically of up to about 60% by weight, based on total weight of the coating composition. The amount of pigment used depends on the nature of the pigment and on the depth of the color and/or the intensity of the effect it is intended to produce, and also by the dispersibility of the pigments in the pigmented coating composition. The pigment content, based in each case on the total weight of the pigmented coating composition, is generally 0.5% to 50%, more specifically 1% to 30%, very specifically 2% to 20%, and more particularly 2.5% to 10% by weight.

Clearcoat coating compositions typically include no pigment, but may include small amount of colorants or fillers that do not unduly affect the transparency or desired clarity of the clearcoat coating layer produced from the composition.

Additional desired, customary coating additives agents may be included, for example, surfactants, stabilizers, wetting agents, dispersing agents, adhesion promoters, UV absorbers, hindered amine light stabilizers such as HALS compounds, benzotriazoles or oxalanilides; free-radical scavengers; slip additives; defoamers; reactive diluents, of the kind which are common knowledge from the prior art; wetting agents such as siloxanes, fluorine compounds, carboxylic monoesters, phosphoric esters, polyacrylic acids and their copolymers, for example polybutyl acrylate, or polyurethanes; adhesion promoters such as tricyclodecanedimethanol; flow control agents; film-forming assistants such as cellulose derivatives; rheology control additives, such as the additives known from patents WO 94/22968, EP-A-0 276 501, EP-A-0 249 201 or WO 97/12945; crosslinked polymeric microparticles, as disclosed for example in EP-A-0 008 127; inorganic phyllosilicates such as aluminum-magnesium silicates, sodium-magnesium and sodium-magnesium-fluorine-lithium phyllosilicates of the montmorillonite type; silicas such as Aerosils®.; or synthetic polymers containing ionic and/or associative groups such as polyvinyl alcohol, poly(meth)acrylamide, poly(meth)acrylic acid, polyvinylpyrrolidone, styrene-maleic anhydride copolymers or ethylene-maleic anhydride copolymers and their derivatives, or hydrophobically modified ethoxylated urethanes or polyacrylates; flame retardant; and so on. Typical coating compositions include one or a combination of such additives.

Coating compositions can be coated by any of a number of techniques well-known in the art. These include, for example, spray coating, dip coating, roll coating, curtain coating, and the like. In one or more specific embodiments, for automotive body panels, spray coating is used. The coating compositions of the invention can be applied by any of the typical application methods, such as spraying, knife coating, spreading, pouring, dipping, impregnating, trickling or rolling, for example. In the course of such application, the substrate to be coated may itself be at rest, with the application equipment or unit being moved. Alternatively the substrate to be coated, in particular a coil, may be moved, with the application unit at rest relative to the substrate or being moved appropriately. In one or more embodiments, spray application methods, such as compressed-air spraying, airless spraying, high-speed rotation, electrostatic spray application, alone or in conjunction with hot spray application such as hot-air spraying, for example, are used.

The coating compositions and coating systems of the invention, especially the clearcoat systems, are employed in particular in the technologically and esthetically particularly demanding field of automotive OEM finishing and also of automotive refinish. In one or more embodiments, the coating compositions of the invention are used in multistage coating methods, particularly in methods where a pigmented basecoat film is first applied to an uncoated or precoated substrate and thereafter a film with the coating compositions of the invention is applied. The invention, accordingly, also provides multicoat effect and/or color coating systems comprising at least one pigmented basecoat and at least one clearcoat disposed thereon, wherein the clearcoat has been produced from the coating composition containing the product biobased hydroxy-urethane materials as disclosed herein.

When the coating composition is used as the clearcoat of a composite color-plus-clear coating, the pigmented basecoat composition may be a coating composition containing the disclosed product biobased hydroxy-urethane materials or may be any of a number of types well-known in the art, and does not require explanation in detail herein. Polymers known in the art to be useful in basecoat compositions include acrylics, vinyls, polyurethanes, polycarbonates, polyesters, alkyds, and polysiloxanes. In one or more embodiments, the polymers include acrylics and polyurethanes. In one specific embodiment of the invention, the basecoat composition also utilizes a biobased hydroxy-urethane material. In one or more specific embodiments, the biobase hydroxy urethane is utilized as a clearcoat material.

Basecoat polymers may be thermoplastic, or may be crosslinkable and comprise one or more type of crosslinkable functional groups. Such crosslinkable functional groups include, for example, hydroxy, isocyanate, amine, epoxy, acrylate, vinyl, silane, and acetoacetate groups. These groups may be masked or blocked in such a way so that they are unblocked and available for the crosslinking reaction under the desired curing conditions, generally elevated temperatures. Basecoat polymers may be self-crosslinkable or may require a separate crosslinking agent that is reactive with the functional groups of the polymer. When the polymer comprises hydroxy functional groups, for example, the crosslinking agent may be an aminoplast resin, isocyanate and blocked isocyanates (including isocyanurates), and acid or anhydride functional crosslinking agents.

Not only water-thinnable basecoat materials but also basecoat materials based on organic solvents can be used. Suitable basecoat materials are described for example in EP-A-0 692 007 and in the documents cited there in column 3 lines 50 et seq. In one or more embodiments, the applied basecoat material is first dried, i.e., at least some of the organic solvent and/or water is stripped from the basecoat film in an evaporation phase. Drying is accomplished at temperatures from room temperature to 80 °C. Drying is followed by the application of the coating composition of one or more embodiments of the invention. Subsequently, the two-coat system is baked, generally under conditions employed for automotive OEM finishing, at temperatures from 30 to 200 °C, more specifically from 40 to 190 °C, and in particular 50 to 180 °C, for a time of 1 min up to 10 h, more specifically 2 min up to 5 h, and in particular 3 min to 3 h, although longer cure times may also be employed at the temperatures employed for automotive refinish, which are generally between 30 and 90 °C.

In one or more embodiments, the coating compositions are subjected to conditions so as to cure the coating layers. The applied coating compositions can be cured after a certain rest time or "flash" period. The rest time serves, for example, for the leveling and devolatilization of the coating films or for the evaporation of volatile constituents such as solvents. The rest time may be assisted or shortened by the application of elevated temperatures or by a reduced humidity, provided this does not entail any damage or alteration to the coating films, such as premature complete crosslinking, for instance. The thermal curing of the coating compositions has no peculiarities in terms of method but instead takes place in accordance with the typical, known methods such as heating in a forced-air oven or irradiation with IR lamps. The thermal cure may also take place in stages. Another curing method is that of curing with near infrared (NIR) radiation. Although various methods of curing may be used, heat-curing is generally used. Generally, heat curing is effected by exposing the coated article to elevated temperatures provided primarily by radiative heat sources. The thermal cure takes place advantageously at a temperature of 30 to 200 °C, more specifically 40 to 190 °C, and in particular 50 to 180 °C for a time of 1 min up to 10 h, more specifically 2 min up to 5 h, and in particular 3 min to 3 h, although longer cure times may be employed in the case of the temperatures that are employed for automotive refinish, which are generally between 30 and 90 °C. Curing temperatures will vary depending on the particular crosslinking agents, however they generally range between 93 °C. and 177 °C, specifically between 115 °C and 150 °C and more specifically at temperatures between 115 °C and 138 °C for a blocked acid catalyzed system. For an unblocked acid catalyzed system, the cure temperature is generally between 82 °C and 125 °C. The curing time will vary depending on the particular components used, and physical parameters such as the thickness of the layers, however, typical curing times range from about 15 to about 60 minutes, and specifically from about 15 to about 25 minutes for blocked acid catalyzed systems and from about 10 to about 20 minutes for unblocked acid catalyzed systems.

The cured basecoat layers formed may have a thickness of from about 5 to about 75 µm, depending mainly upon the color desired and the thickness needed to form a continuous layer that will provide the color. The cured clearcoat layers formed typically have thicknesses of from about 30 µm to about 65 µm.

The coating composition can be applied onto many different types of substrates, including metal substrates such as bare steel, phosphated steel, galvanized steel, or aluminum; and non-metallic substrates, such as plastics and composites. The substrate may also be any of these materials having upon it already a layer of another coating, such as a layer of an electrodeposited primer, primer surfacer, and/or basecoat, cured or uncured.

The substrate may be first primed with an electrodeposition (electrocoat) primer. The electrodeposition composition can be any electrodeposition composition used in automotive vehicle coating operations. Non-limiting examples of electrocoat compositions include the CATHOGUARD® electrocoating compositions sold by BASF Corporation. Electrodeposition coating baths usually comprise an aqueous dispersion or emulsion including a principal film-forming epoxy resin having ionic stabilization (e.g., salted amine groups) in water or a mixture of water and organic co-solvent. Emulsified with the principal film-forming resin is a crosslinking agent that can react with functional groups on the principal resin under appropriate conditions, such as with the application of heat, and so cure the coating. Suitable examples of crosslinking agents, include, without limitation, blocked polyisocyanates. The electrodeposition coating compositions usually include one or more pigments, catalysts, plasticizers, coalescing aids, antifoaming aids, flow control agents, wetting agents, surfactants, UV absorbers, HALS compounds, antioxidants, and other additives.

In one or more embodiments, the electrodeposition coating composition is applied to a dry film thickness of 10 to 35 µm. After application, the coated vehicle body is removed from the bath and rinsed with deionized water. The coating may be cured under appropriate conditions, for example by baking at from about 135 °C to about 190 °C for between about 15 and about 60 minutes.

Because the coatings of the invention produced from the coating compositions of the invention adhere excellently even to electrocoats, surfacer coats, basecoat systems or typical, known clearcoat systems that have already cured, they are outstandingly suitable not only for use in automotive OEM finishing but also for automotive refinish or for the modular scratchproofing of automobile bodies that have already been painted.

Embodiments of the invention are now described with reference to the following examples. Before describing several exemplary embodiments of the invention, it is to be understood that the invention is not limited to the details of construction or process steps set forth in the following description.

### EXAMPLES

### Example 1 - Preparation Of Hydoxy Urethane

A C₃₆ dimer diamine (equivalent weight of 275 grams/equivalent) was reacted with propylene carbonate (equivalent weight of 102.1 grams/equivalent) to provide the corresponding C₃₆ hydroxy urethane.

Table 1 details the materials and their respective quantities used in the synthesis of the C₃₆ Hydoxy Urethane resin.

**Table 1**

| No. | Materials | Amount (gms) | Equivalents |
|---|---|---|---|
| 1. | C₃₆ dimer diamine | 137 | 0.25 equivalents |
| 2. | Propylene Carbonate | 57.37 | 0.56 equivalents |
| 3. | Solvesso-100 | 20 | |
| | Total charge | 214.37 | |

| | | | |
|---|---|---|---|
| *An excess of Propylene Carbonate over C₃₆ dimer diamine (1.12 x) based on 2:1 mole ratio is used so to ensure the completion of the reaction. | | | |

The C₃₆ dimer diamine was charged to a 4-neck reaction flask equipped with a mechanical stirrer, temperature probe, reflux condenser and a dropping funnel. The reaction mixture was not heated. Propylene carbonate (Initially only 2x = 0.5 moles were added) was added dropwise through the dropping funnel. The reaction temperature was monitored, since the reaction was exothermic. A maximum temperature observed during the reaction was 43 °C. Upon completion of the addition of Propylene Carbonate, a portion was sampled to determine the amine number (Titration with 0.1 N alcoholic KOH). The dropping funnel was rinsed with Solvesso-100 solvent. Additional propylene carbonate was added, based upon the amine number. The reaction was stopped when the amine number saturated for a given solids content. The resin was collected and the properties were tested.

### Example 2 - Results

The results are presented in Table 2, below

**Table 2**

| **No.** | **Property** | **Value** |
|---|---|---|
| 1. | % Non-volatiles | 86.19 |
| 2. | Amine Number final | 1.86 mg/ gms KOH |
| 3. | Viscosity | 3221 centipoise |
| 4. | Viscosity at 70 % solids (Solvesso 100) | 394 centipoise |

### Example 3 - Coatings

The crosslinking and utility of the above biobased hydroxy urethanes as reactive cosolvents was demonstrated by their crosslinking with melamine resins. The formulation used is described in Table 3 below:

**Table 3**

| **No.** | **Component** | **Gms** |
|---|---|---|
| 1. | 46169-4-4 ( Hydroxy urethane resin) | 6.5 |
| 2. | Resimene 755 | 1.7 |
| 3. | Resimene 764 | 1.7 |
| 4. | Dodecylbenzene sulfonic acid | 1 |

Drawndowns were made on electrocoated steel panels with a wet film thickness of 6 mils. The coatings were cured by baking in an over at about 285 °F (about 140 °C) for 20 minutes. The coatings were then tested for cross-hatch adhesion and König Pendulum Hardness.

Cross-Hatch Adhesion: The coating passed the cross-hatch adhesions as per ASTM D3359. The rating for the test was 5B on a scale of 0B to 5B, with 0B being the worst and 5B being the best.

Konig Pendulum Hardness: The coating was tested for Konig Pendulum Hardness according to ASTM D4336. The average of three readings for pendulum hardness was found to be 76 seconds. This indicates effective crosslinking and thus acts as a synergistic reactive diluent to the principal resin. The use of the bio based hydroxy urethane did not diminish or deteriorate any properties of the coating.

## Claims

1. A curable coating composition comprising:
(a) a biobased hydroxy urethane prepared by reacting a cyclic carbonate of general formula (I) 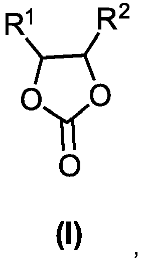
wherein R¹ and R² are independently selected from hydrogen, halogen or a linear alkyl group having 1 to 6 carbon atoms,
wherein the cyclic carbonate is selected from the group consisting of ethylene carbonate, propylene carbonate, and butylene carbonate with a fatty acid diamine of formula (II) 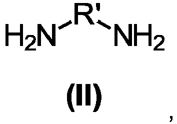
wherein R' comprises a hydrophobic group having 16-54 carbon atoms, wherein the reaction is conducted in the absence of an isocyanate and wherein the reaction is conducted at a temperature in the range of about 20 °C to about 30°C; and
b) a curing agent.

2. The curable coating composition of claim 1, wherein the curing agent is selected from a melamine resin, a formaldehyde resin, a melamine formaldehyde resin, an urea resin, a polyanhydride, a polysiloxane, an isocyanate, and a diisocyanate.

3. The curable coating composition of any of claims 1-2, wherein the cyclic carbonate is propylene carbonate.

4. The curable coating composition of any of claims 1-3, wherein the fatty acid diamine has the general formula (III)

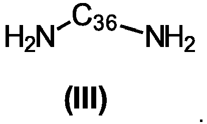

5. The curable coating composition of any of claims 1-4, wherein the fatty acid diamine comprises a C₃₆ fatty acid dimer diamine having the molecular structure:

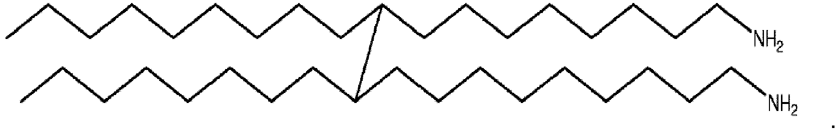

6. The curable coating composition of any of claim 1-5, wherein the biobased hydroxy urethane comprises general formula (IV) 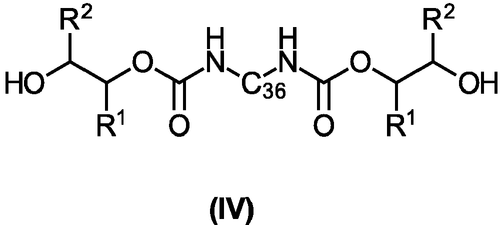 wherein R¹ and R² are independently selected from hydrogen, halogen or a linear alkyl group having 1 to 6 carbon atoms.

7. Use of the biobased hydroxy-urethane of general formula (IV) 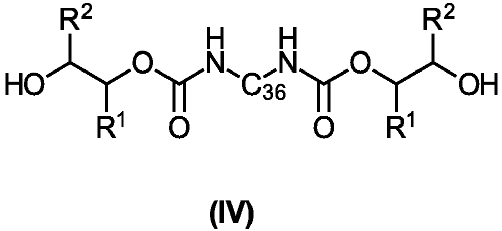 wherein R¹ and R² are independently selected from hydrogen, halogen or a linear alkyl group having 1 to 6 carbon atoms
as a reactive diluent in a solvent-born automotive coating, or a paint.

## Patentansprüche

1. Härtbare Beschichtungszusammensetzung, umfassend:
(a) ein biobasiertes Hydroxyurethan, hergestellt durch Umsetzen eines cyclischen Carbonats der allgemeinen Formel (I) 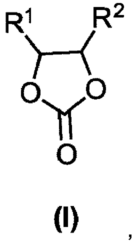 wobei R¹ und R² unabhängig aus Wasserstoff, Halogen oder einer linearen Alkylgruppe mit 1 bis 6 Kohlenstoffatomen ausgewählt sind,
wobei das cyclische Carbonat aus der Gruppe bestehend aus Ethylencarbonat, Propylencarbonat und Butylencarbonat ausgewählt ist,
mit einem Fettsäurediamin der Formel (II) 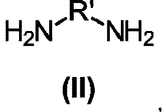 wobei R' eine hydrophobe Gruppe mit 16-54 Kohlenstoffatomen umfasst, wobei die Umsetzung in Abwesenheit eines Isocyanats durchgeführt wird und wobei die Umsetzung bei einer Temperatur im Bereich von etwa 20 °C bis etwa 30 °C durchgeführt wird; und
b) ein Härtungsmittel.

2. Härtbare Beschichtungszusammensetzung nach Anspruch 1, wobei das Härtungsmittel aus einem Melaminharz, einem Formaldehydharz, einem Melamin-FormaldehydHarz, einem Harnstoffharz, einem Polyanhydrid, einem Polysiloxan, einem Isocyanat und einem Diisocyanat ausgewählt ist.

3. Härtbare Beschichtungszusammensetzung nach einem der Ansprüche 1-2, wobei es sich bei dem cyclischen Carbonat um Propylencarbonat handelt.

4. Härtbare Beschichtungszusammensetzung nach einem der Ansprüche 1-3, wobei das Fettsäurediamin die allgemeine Formel (III) 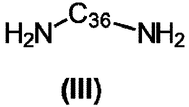 aufweist.

5. Härtbare Beschichtungszusammensetzung nach einem der Ansprüche 1-4, wobei das Fettsäurediamin ein C₃₆-Fettsäuredimerdiamin mit der Molekularstruktur: 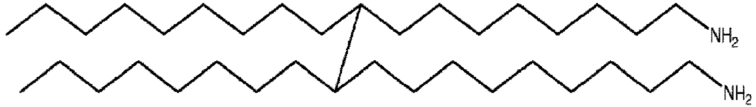 umfasst.

6. Härtbare Beschichtungszusammensetzung nach einem der Ansprüche 1-5, wobei das biobasierte Hydroxyurethan die allgemeine Formel (IV) 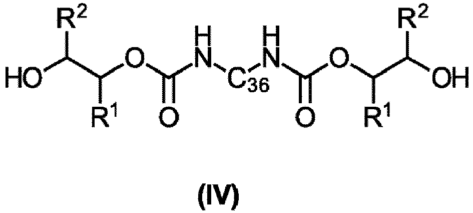 umfasst, wobei R¹ und R² unabhängig aus Wasserstoff, Halogen oder einer linearen Alkylgruppe mit 1 bis 6 Kohlenstoffatomen ausgewählt sind.

7. Verwendung des biobasierten Hydroxyurethans der allgemeinen Formel (IV) 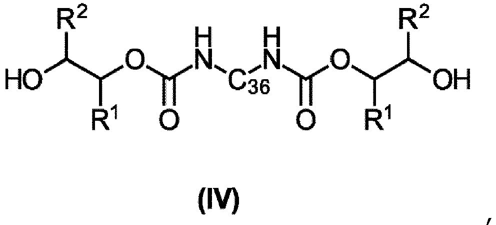 wobei R¹ und R² unabhängig aus Wasserstoff, Halogen oder einer linearen Alkylgruppe mit 1 bis 6 Kohlenstoffatomen ausgewählt sind,
als reaktives Verdünnungsmittel in einem lösungsmittelhaltigen Autolack oder einem Anstrichmittel.

## Revendications

1. Composition de revêtement durcissable comprenant :
(a) un hydroxyuréthane biosourcé préparé par réaction d'un carbonate cyclique de formule générale (I) 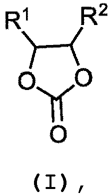 R¹ et R² étant indépendamment choisis entre l'hydrogène, un halogène et un groupe alkyle linéaire ayant 1 à 6 atomes de carbone,
le carbonate cyclique étant choisi dans le groupe constitué par le carbonate d'éthylène, le carbonate de propylène et le carbonate de butylène,
avec une diamine d'acide gras de formule (II) 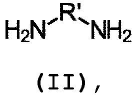 R' comprenant un groupe hydrophobe ayant 16-54 atomes de carbone,
la réaction étant mise en œuvre en l'absence d'un isocyanate et la réaction étant mise en œuvre à une température dans la plage d'environ 20 °C à environ 30 °C ; et
(b) un agent durcisseur.

2. Composition de revêtement durcissable selon la revendication 1, l'agent durcisseur étant choisi entre une résine de mélamine, une résine de formaldéhyde, une résine de mélamine-formaldéhyde, une résine d'urée, un polyanhydride, un polysiloxane, un isocyanate et un diisocyanate.

3. Composition de revêtement durcissable selon l'une quelconque des revendications 1-2, le carbonate cyclique étant le carbonate de propylène.

4. Composition de revêtement durcissable selon l'une quelconque des revendications 1-3, la diamine d'acide gras répondant à la formule générale (III)

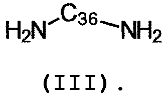

5. Composition de revêtement durcissable selon l'une quelconque des revendications 1-4, la diamine d'acide gras comprenant une diamine dimère d'acide gras en C₃₆ ayant la structure moléculaire :

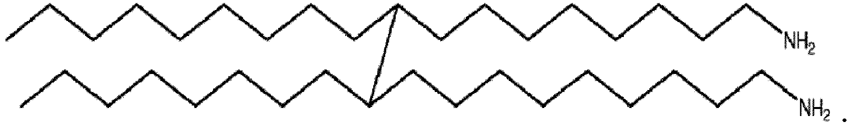

6. Composition de revêtement durcissable selon l'une quelconque des revendications 1-5, l'hydroxyuréthane biosourcé comprenant la formule générale (IV) 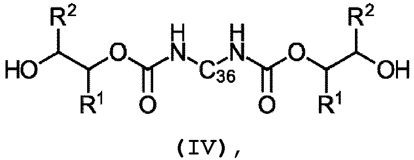 R¹ et R² étant indépendamment choisis entre l'hydrogène, un halogène et un groupe alkyle linéaire ayant 1 à 6 atomes de carbone.

7. Utilisation de l'hydroxyuréthane biosourcé de formule générale (IV) 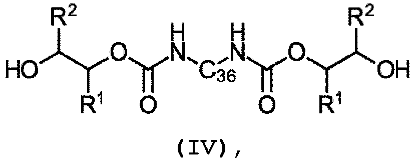 R¹ et R² sont indépendamment choisis entre l'hydrogène, un halogène et un groupe alkyle linéaire ayant 1 à 6 atomes de carbone
en tant que diluant réactif dans un revêtement pour automobile à base de solvant ou une peinture.
